# EUROPÄISCHE PATENTSCHRIFT

(11) **EP 1 505 862 B1**
(45) Veröffentlichungstag und Bekanntmachung des Hinweises auf die Patenterteilung: **14.10.2009**
(21) Anmeldenummer: 03729890.8
(22) Anmeldetag: 13.05.2003
(51) Int. Cl.: A01B 45/02

(54) **BODENBEARBEITUNGSGERÄT**
SOIL CULTIVATING DEVICE
APPAREIL DE TRAVAIL DU SOL

(30) Priorität: 15.05.2002 DE 10221600
(43) Veröffentlichungstag der Anmeldung: 16.02.2005
(73) Patentinhaber: Wiedenmann GmbH, 89192 Rammingen (DE)
(72) Erfinder: WIEDENMANN, Georg, 89192 Rammingen (DE)
(74) Vertreter: Kastel, Stefan
(86) Internationale Anmeldenummer: PCT/DE2003/001543
(87) Internationale Veröffentlichungsnummer: WO 2003/096784

(56) Entgegenhaltungen:
- EP-A- 1 040 741
- AU-B- 572 915
- US-A- 3 204 703
- US-A- 3 247 812
- US-A- 5 570 746

## Beschreibung

Die Erfindung betrifft ein Bodenbearbeitungsgerät mit den Merkmalen des Oberbegriffs des beigefügten Anspruchs 1.

Insbesondere betrifft die Erfindung ein fahrbares oder an ein Fahrzeug anschließbares Bodenbearbeitungsgerät mit Werkzeugen, die in Richtung auf den zu bearbeitenden Boden insbesondere auf- und abgehend geführt von einer zentralen bevorzugt von einem Zug- oder Tragfahrzeug von dessen Antriebsmotor abgeleitet rotierend antreibbaren Kurbelwelle, betätigt sind. Mehr insbesondere betrifft die Erfindung ein Bearbeitungsgerät für die Tiefenlockerung von Böden, beispielsweise unterhalb einer Grasnabe, mit einem geradlinig höhenverstellbaren Chassis und mit einer daran im wesentlichen senkrecht zur Fahrtrichtung verlaufend angeordneten Aufeinanderfolge von Stechwerkzeugen, deren jedes mittels eines Lenkergestänges in einstellbarer Ausrichtung auf den Boden geführt, zur Ausführung des Stechvorganges mittels des Kurbeltriebs in etwa vertikaler und in Fahrtrichtung verlaufender Ebene unter Federkraft gegen einen Anschlag verschwenkt gehalten ist, wobei das Lenkergestänge einen Endes an einem chassisfesten Lager und anderen Endes an dem Stechwerkzeug bzw. einer dieses fest aufnehmenden Halterung angelenkt ist. Solche Geräte sind beispielsweise aus der EP 0 452 449 B1, der EP 1 040 741, der DE 200 15 504 U, der DE 200 20 018 U und der EP 1 210 853 A1 bekannt und in vielfältiger Ausbildung im Einsatz.

Diese bekannten Maschinen arbeiten bereits mit unterschiedlichen Arbeitsbreiten und/oder Eindringtiefen der Bodenbearbeitungswerkzeuge sowie zentralverstellbarer Einstellung des Einstechwinkels; hierzu wird auf die vorgenannten vorveröffentlichten Druckschriften ausdrücklich Bezug genommen, weil die nachstehenden Ausführungen auf alle diese bekannte Maschinentypen Anwendung finden können.

Bislang wurden Geräte der in Rede stehenden Art von der Zapfwelle des Zug- bzw. Tragfahrzeugs ausgehend angetrieben. Dies erfolgt meist über ein zentrales, auf die Kurbelwelle arbeitendes Getriebe, bei dem ein Verteilungsgetriebe derart mittig an der Kurbelwelle angeordnet wurde, dass das Getriebe und die Kurbelwelle eine bauliche Einheit gebildet haben. Damit war diese Einheit aus Getriebe, dessen Gehäuse und Kurbelwelle eine besondere konstruktive Einheit, die entsprechenden Fertigungsaufwand verursacht hat.

Die Bodenbearbeitungsgeräte haben sich in der Praxis vielfach bewährt, insbesondere für die professionelle Pflege großer Rasenflächen. Die bekannten Maschinen stellen zum Teil aber noch relativ hohe Anforderungen an die Zug- oder Tragfahrzeuge. Neben entsprechender Tragkraft, Größe und Leistung verlangen einige Geräte auch einen Kriechgang mit Geschwindigkeiten unter 5 km/h.

Aus der US-3204703 ist ein Bodenbearbeitungsgerät mit einem Werkzeug zur Auflockerung des Bodens bekannt, welches mittels einer Kurbelwelle auf und ab bewegbar ist. Die Kurbelwelle ist mittels eines Kettengetriebes, das an einem freien Ende verdrehfest angreift, angetrieben. Das Kettengetriebe ist Teil einer formflüssigen Antriebseinrichtung, die auch verdrehfest an Antriebsrädern angreift. Diese Antriebsvorrichtung ist über einen Keilriemenantrieb mit einem Motor verbunden. Der Keilriemenantrieb dient als Kupplung zum lösbaren Ankuppeln des Motors an die Antriebsvorrichtung.

Aus der US-3247812 ist ein Bodenbearbeitungsgerät mit mehreren Rotationswerkzeugen bekannt. Die Rotationswerkzeuge sind mittels Kettengetriebe an eine gemeinsame Antriebswelle angekuppelt, die wiederum mit einem mittleren Bereich ebenfalls mittels eines Kettenantriebes an einem Verteilergetriebe angreift.

Aus der AU-B-572015 ist ein Bodenbearbeitungsgerät mit den Merkmalen des Oberbegriffes des beigefügten Patentanspruches 1 bekannt. Dabei wird eine in einem Chassis gelagerte Kurbelwelle, mittels welcher Stechwerkzeuge auf und ab bewegend angetrieben sind, über ein seitlich freies Ende davon mittels eines Kettengetriebes angetrieben.

Ein weiteres Bodenbearbeitungsgerät mit durch eine Kurbelwelle antreibbaren auf und ab bewegbaren Stechwerkzeugen ist aus der US-5570746 bekannt.

Die Erfindung hat sich als ein Ziel gesetzt, den Einsatz derartiger Bodenbearbeitungsgeräte auch bei kleineren Flächen als bisher wirtschaftlicher und handhabbarer zu gestalten. Abgesehen von der Ausweitung des Angebotes in Richtung kleinerer Maschinen ist ein weiteres Ziel der Erfindung, die Maschinen möglichst schnell zu machen. Zum Beispiel aus Stabilitätsgründen oder aus Handhabungsgründen (Wendigkeit) ist es auch wünschenswert, die Geräte oder deren Schwerpunkt möglichst nahe an dem Zug- bzw. Trägerfahrzeug anzuordnen. Dies ist aber wegen des Antriebes problematisch. Bisher wird ein solches Belüftungsgerät in der Regel von einer Zapfwelle des Zugfahrzeugs ausgehend angetrieben, die in Ableitung von der Kurbelwelle des Antriebsmotors ohne Übersetzungsgetriebe, d.h. in der Übersetzung von 1:1, etwa eine Drehzahl im Bereich von 500 bis 600 Umdrehungen pro Minute ausführt; bei entsprechend höheren Motordrehzahlen entsprechen mehr. Ein Ziel ist auch, Traktoren zu verwenden, die keinen Kriechgang benötigen (4,2 Km/h).

Eine schnelle Arbeitsweise verlangt unter anderem geringe Massen. Daraus leitet sich die Forderung nach kurzen Kraftübertragungswegen ab. Neben der Forderung möglichst geringer bewegter Massen tritt diejenige eines raumsparenden Aufbaus, wobei sich diese beiden Forderungen auch ergänzen können.

Ein Ziel der vorliegenden Erfindung ist es somit, Geräte der vorstehend angesprochenen Art, aber auch ähnlich zentral betätigte Werkzeuge aufweisende Bodenbearbeitungsmaschinen raumsparender und schneller arbeitend auszugestalten.

Hierzu wird ein Bodenbearbeitungsgerät mit den Merkmalen des beigefügten Anspruchs 1 vorgeschlagen. Vorteilhafte Ausgestaltungen sind Gegenstand der Unteransprüche.

Besonders bevorzugt ist die Anwendung der Erfindung auf die eingangs erwähnten, grundsätzlich bekannten Bodenlockerungsgeräte, deren Werkzeuge den Boden "brechen", also nicht lediglich Einstechbewegungen ausführen, sondern zugleich eine Winkelbewegung ausführen, so dass die Höhlung im Boden erweitert wird.

Gemäß einem Aspekt der Erfindung ist vorgesehen, dass die Kurbelwelle von wenigstens einem seitlichen Endbereich ihrer Erstreckung quer zur Fahrtrichtung her angetrieben ist. Ein Einleiten der Antriebskräfte in die Kurbelwelle von der Seite her bietet die Möglichkeit, ein Getriebe in form eines gekapselten Riemenantriebs außerhalb des Arbeitsbereiches und damit außerhalb des Schmutzbereiches zu realisieren. Ein derart gestaltetes Antriebsprinzip vereinfacht den konstruktiven Aufbau, verringert die Anfälligkeit und erleichtert darüber hinaus die Wartung des Kurbelwellenantriebes. Aufgrund des einfachen Zugangs ist es ohne weiteres möglich, auch kraftschlüssige Antriebe, wie z.B. Keilriemenantriebe, oder andere Riemenantriebe einzusetzen. Ein im Zuge einer Wartung eventuell wünschenswerter oder notwendiger Tausch eines Antriebsriemens ist bei der Anordnung des Kurbelwellenantriebes im Stirnseitenbereich der Kurbelwelle und/oder des Bodenbearbeitungsgerätes problemlos möglich.

Nach einem der Grundgedanken der vorliegenden Erfindung wird der Antrieb der Kurbelwelle gegenüber dem aus dem Stand der Technik bekannten Kurbelwellenantrieben grundsätzlich umgestaltet, und zwar derart, dass er raumsparender in Richtung einer möglichst nahen Zuordnung des Gerätes zum Zug- bzw. Tragfahrzeug gestaltet ist und dass für den Antrieb einfache und gängige Antriebselemente verwendet werden können.

In vorteilhafter Ausgestaltung ist vorgesehen, die Kurbelwelle hinsichtlich ihrer Erstreckung über die Breite des Zugfahrzeugs bzw. Lüftergerätes hinweg von wenigstens einer der beiden seitlichen Stirnbereiche her anzutreiben. Bei beidseitigem Antrieb kann die Kurbelwelle über die Breite durchgehend oder auch getrennt ausgebildet sein.

Der Antrieb erfolgt bevorzugt von einem Antriebszapfen aus gesehen zu einem Verteilergetriebe, das vom Fahrzeug aus gesehen hinter der Kurbelwelle angeordnet ist und von der Mitte her nach beiden Seiten zu Getrieberädern führt. Die diese Getrieberäder aufweisende seitliche Antriebseinheit ist erfindungsgemäß als Zugmittelgetriebe ausgeführt. Erfindungsgemäß werden kraftschlüssige Riemenantriebe, wie Keilriemen, eingesetzt, die insoweit als kraftschlüssige Kraftübertragungselemente die Eigenschaft von Rutschkupplungen haben. Dies hat Vorteile bei Auftreten von Bodenbearbeitungsproblemen, wie zum Beispiel das Auftreffen der (Belüftungs-)Werkzeuge auf Stein oder dergleichen.

Es ist allerdings auch möglich, gesonderte Rutschkupplungen im Kraftübertragungsstrang als Vorsorge gegen ansonsten zerstörerische Betriebsablaufsbehinderungen einzusetzen. Bei etwa 20 cm Einstechtiefe arbeitet die Kurbelwelle vorzugsweise direkt auf den Werkzeugträger. Das ist aber keine für die Erfindung bedeutsame Begrenzung.

Gemäß einer anderen Grundidee der Erfindung wird durch eine Verlagerung des Verteilergetriebes vom Fahrzeug aus gesehen hinter die Kurbelwelle bei entsprechend das Gerät durchgreifendem Zapfwellenanschluss der benötigte Platz hinsichtlich des Abstandes zwischen Werkzeugträger und Zugfahrzeuges entsprechend klein. Dabei kann der Zapfwellenanschluss bis hinter die dem Fahrzeug zugewandte Frontseite des Belüftungsgerätes zurückverlegt angeordnet sein. Dadurch lassen sich die bewegten Massen im Zuge der Kraftübertragung auf die Werkzeugträger entsprechend verringern und die Arbeitsgeschwindigkeit der Werkzeuge vergrößern. Man kann sich hier von der Arbeitsgeschwindigkeit an die von den vom antreibenden Fahrzeug her vorgegebenen Drehzahlen annähern und möglichst kleine Übersetzungsverhältnisse vorsehen. Im angestrebten Idealfall sind Übersetzungsverhältnisse von der Kurbelwelle des Antriebsfahrzeugs her auf die Kurbelwelle des Bodenbearbeitungsgerätes in der Größenordnung von 1 : 1 erreichbar.

In der Regel sind die hier in Rede stehenden Bodenbearbeitungsgeräte rückseitig am oder hinter dem Fahrzeug angeordnet; auf diese übliche Anbauart beziehen sich die hier verwendeten räumlichen Angaben (insbesondere "in Fahrtrichtung" hinten oder vorne; "Fronseite"). Die Ideen der Erfindung und der vorteilhaften Ausgestaltungen derselben lassen sich auch auf eventuelle andere Anbauarten unter entsprechend geänderter Anpassung der räumlichen Angaben übertragen.

Ein Ausführungsbeispiel des erfindungsgemäß ausgestatteten Bodenbearbeitungsgerätes ergibt sich aus den beiliegenden Zeichnungen. Es zeigen:
- Figur 1: eine vom Zug- bzw. Tragfahrzeug her seitlich versetzt gesehen perspektivische Ansicht eines Bodenbearbeitungsgerätes;
- Figur 2: eine ebenfalls seitlich versetzte perspektivische Ansicht des Gerätes in Richtung des Zug- bzw. Tragfahrzeugs gesehen;
- Figur 3: eine Rückansicht - auf das Fahrzeug zu gesehen - auf das Bodenbe- arbeitungsgerät bei weggelassener Abdeckhaube;
- Figur 4: eine Seitenansicht auf das Bodenbearbeitungsgerät bei weggelassener Abdeckhaube;
- Figur 5: eine Draufsicht auf das Bodenbearbeitungsgerät bei weggelassener Abdeckhaube;
- Figur 6, 7: Seitenansichten des beispielhaften Bodenbearbeitungsgerätes,
- Figur 8: eine Seitenansicht eines Antriebsmechanismus eines der Werkzeuge des Bodenbearbeitungsgeräts; und
- Figur 9: eine Seiteansicht der beweglichen Teile des Antriebsmechanismus ge- mäß Figur 8.

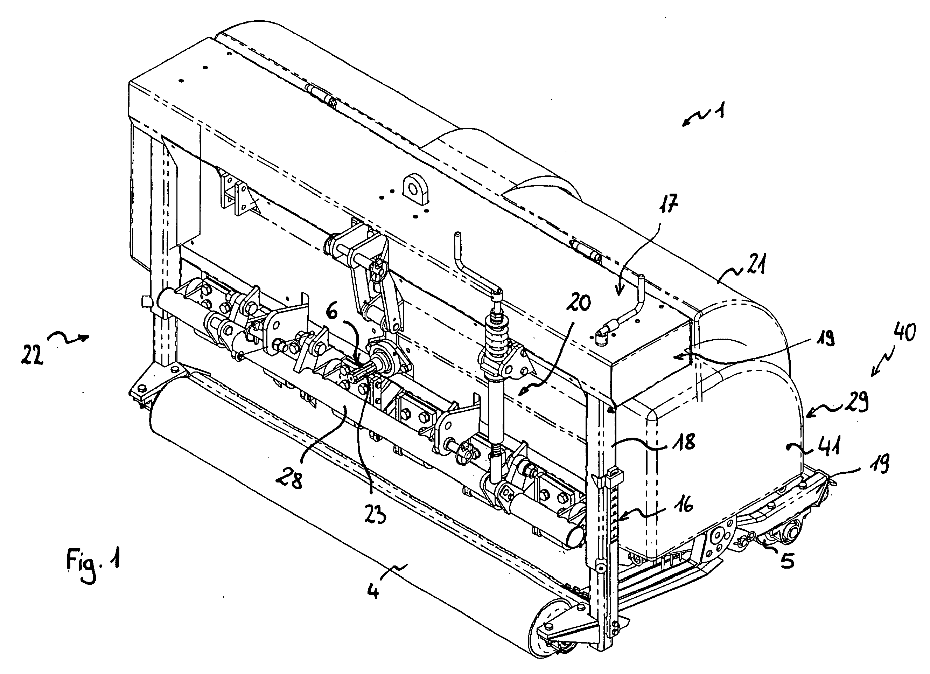

Figur 1 zeigt ein insgesamt mit 1 bezeichnetes Bodenbearbeitungsgerät für das Einbringen von Belüftungsöffnungen im Boden. Das Bodenbearbeitungsgerät 1 ist zum rückseitigen Anbau oder Anhängen an ein (nicht näher dargestelltes) Fahrzeug mit Zapfwellenabtrieb, wie insbesondere einen Traktor, ausgebildet. Es weist hierzu ein geradlinig höhenverstellbares Chassis 19 auf. Das Bodenbearbeitungsgerät 1 ist vom Fahrzeug aus gesehen nach rückwärts mittels einer Abdeckung 21 verkleidet und weist an dem zu bearbeitenden Boden angreifende walzenförmige Abstützungen 4 und 5 auf. Das Chassis 19 hat einen Rahmen 18, der mittels einer Höheneinstelleinrichtung 17 mit Skala 16 zur Anzeige der Arbeitstiefe (Einstechtiefe) gegenüber den auf dem Boden großflächig abrollenden Walzen der Abstützungen 4, 5 verstellbar ist.

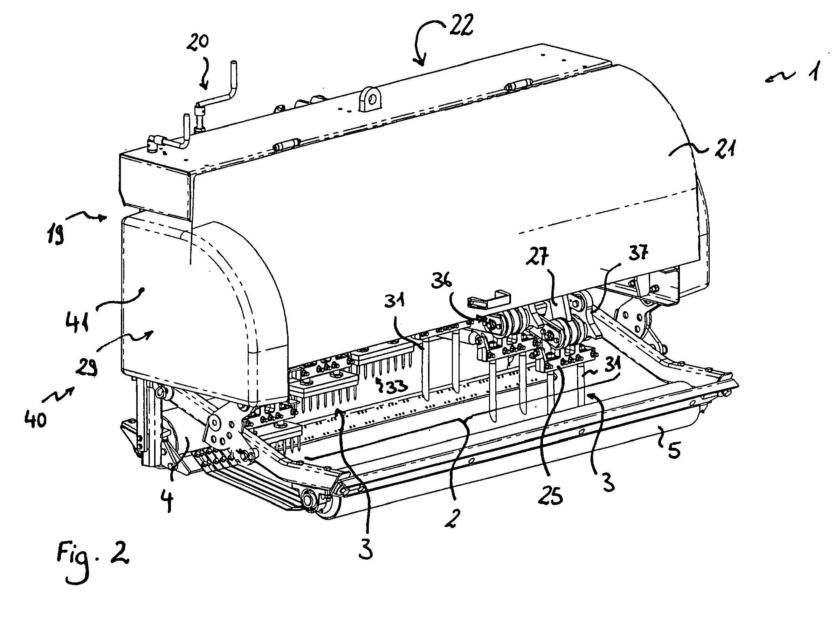

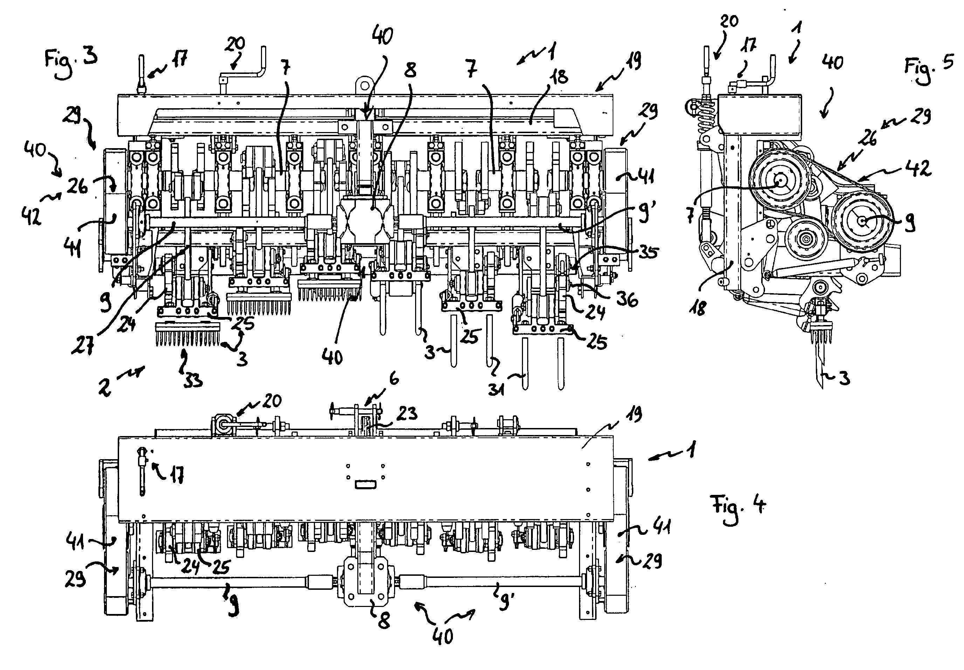

Wie aus den Figuren 2 und 3 ersichtlich, hat das Bodenbearbeitungsgerät 1 eine insgesamt mit 2 bezeichnete Gruppe von in Breitenrichtung des Bodenbearbeitungsgerätes 1 nebeneinander angeordneten spomartigen Werkzeugen 3. In den beigefügten Figuren sind zur Darstellung beispielhaft verschiedene verwendbare Werkzeuggrößen zugleich dargestellt. Es sind große Sporne 31, die jeweils paarweise auf einem Werkzeugträger 25 befestigbar sind, und bürstenartig angeordnete Zinkengruppen 33 mit vielen kleinen Zinken an einer Halteplatte zu sehen, die ebenfalls an dem Werkzeugträger 25 befestigbar ist. Vorzugsweise wird nur eine Werkzeugsorte in der gesamten Gruppe 2 verwendet. Die Werkzeuge 3 dienen dazu, in den Boden zur Belüftung desselben eingestochen zu werden, vorzugsweise dort auch eine Verschwenkbewegung zur Auflockerung auszuführen und wieder herausgezogen zu werden.

In Figur 1 ist an der zu dem Fahrzeug weisenden Seite, also hier der Frontseite 22, der Anschlusszapfen 23 eines Zapfwellenanschlusses 6 zu sehen, mittels dem eine sich im wesentlichen quer zur Fahrtrichtung erstreckende Kurbelwelle 7 (siehe die Figur 3) antreibbar ist. Durch die Drehung der Kurbelwelle 7 werden die Werkzeuge 3 zum Durchführen der Einstechbewegung auf und ab bewegt. Die Werkzeuge 3 sind mittels einer in Figur 1 dargestellten zentralen Einstelleinrichtung 20 einstellbar.

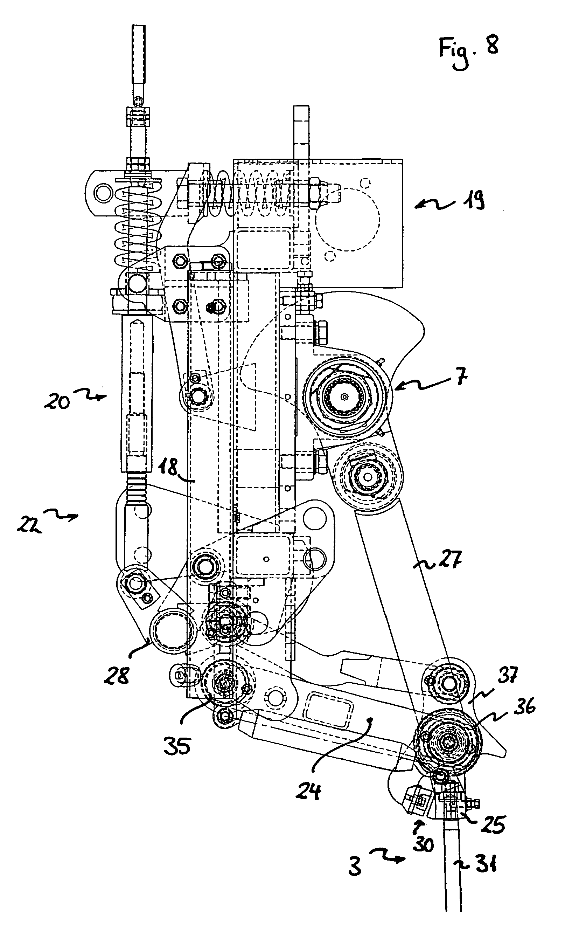

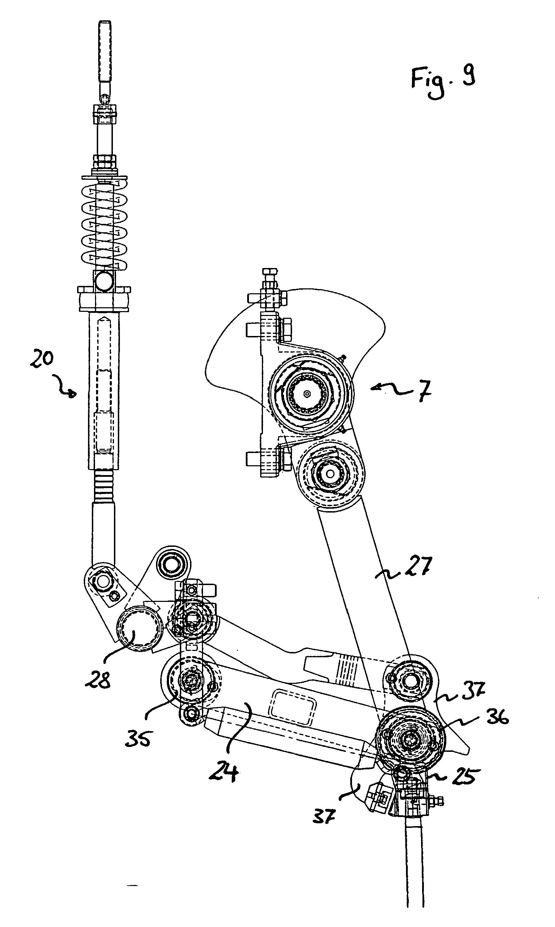

Der Antriebsmechanismus für die Einstechbewegung ist am besten aus den Figuren 8 und 9 ersichtlich. Die Werkzeuge 3 sind an Lenkergestängen 24 angelenkt. Sie sitzen auf Halterungen in Form der Werkzeugträger 25, die federbelastet gegen einen Anschlag 30 verschwenkt sind. Die Lenkergestänge 24 sind mit einem ersten Lager 35 an dem Chassis 19 angelenkt. An ihrem freien Ende tragen sie ein zweites Lager 36, mit dem der jeweilige Werkzeughalter 25 und ein den Anschlag 30 aufweisender Verstellhebel 37 schwenkbeweglich gelagert sind. Über eine zentrale Verstellachse 28 lässt sich mittels der Verstelleinrichtung 20 die Lage der Verstellhebel 37 und damit der Anstellwinkel aller Anschläge 30 und damit wiederum der Einstechwinkel für die Werkzeuge 3 der gesamten Gruppe 2 einstellen. Die Lenkergestänge 24 sind zur Auf- und Abbewegung über Pleuelstangen 27 mit der Kurbelwelle 7 verbunden.

Zur näheren Erläuterung dieses grundsätzlichen Aufbaus und der Funktion des Bodenbearbeitungsgerätes 1 und dessen Einzelteile, insbesondere der Verstelleinüchtung 20, wird ausdrücklich auf die vorerwähnten Druckschriften EP 0 452 449 B1, EP 1 040 741, DE 200 15 504 U, DE 200 20 018 U und EP 1 210 853 A1 verwiesen.

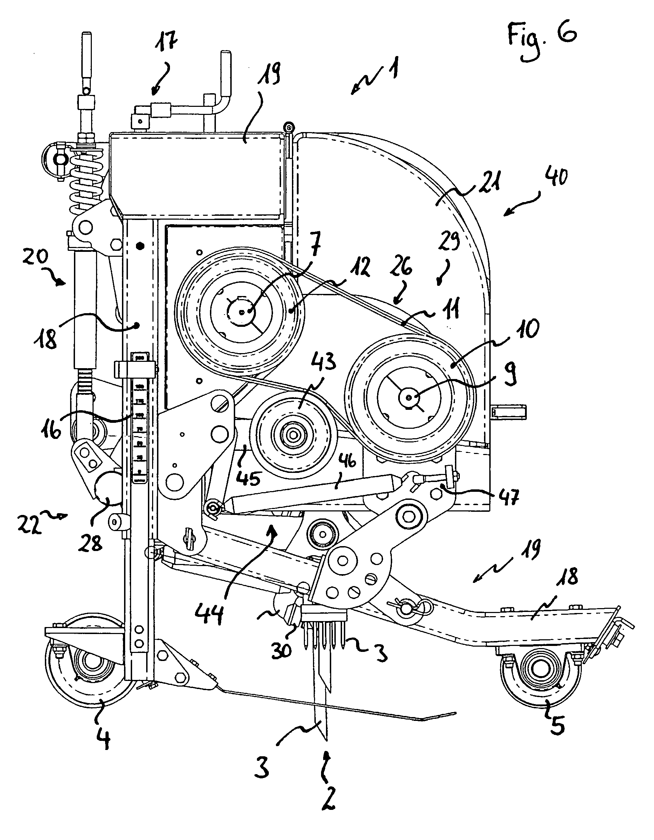

Im folgende wird eine Antriebvomchtung 40, die die Kurbelwelle 7 an den Zapfwellenanschluss 6 getrieblich anschließt näher erläutert. Wie die Figuren 3 bis 7 erkennen lassen, ist der zentrale Zapfwellenanschluss 6 der Kurbelwelle 7 durch die in Fahrtrichtung weisende Ausdehnung des Bodenbearbeitungsgerätes 1 weitgehend hindurchgeführt. Insbesondere wird durch den Zapfwellenanschluss 6 die Antriebskraft über die gegenüber den bisher bekannten Geräten weiter zum Fahrzeug hin verlagerbare Kurbelwelle 7 hinaus geführt.

Gemäß der Darstellung von Fig. 5 ist der Zapfwellenanschluss 6 mittels einer nicht näher dargestellten Welle an ein Verteilergetriebe 8 angeschlossen, von dem aus nach rechts und links Abtriebswellen 9, 9' angeschlossen sind. Das Verteilergetriebe 8 mit Abtriebswellen 9, 9' ist hier vom Fahrzeug aus gesehen jenseits der Kurbelwelle 7 angeordnet. Die Abtriebswellen 9, 9' sind jeweils an eine seitliche Antriebseinrichtung 29 angeschlossen. Jede Antriebseinrichtung 29 ist in einem Gehäuse 41 mit entfernbaren Deckel untergebracht, das vor Schmutz schützt und Fingereingriff verhindert.

In den Figuren 4 bis 7 ist die eine seitlich an dem Bodenbearbeitungsgerät stirnseitig der Kurbelwelle 7 angeordnete Antriebseinrichtung 29 ohne das Gehäuse 41 dargestellt ist. Die Antriebseinrichtung 29 weist ein Zugmittelgetriebe 42 zur Übertragung der Antriebskraft auf die Kurbelwelle 7 auf. In dem dargestellten Beispiel sind die Abtriebswellen 9, 9' jeweils durch einen Keilriemenantrieb 26 mit der Kurbelwelle 7 verbunden. Hierzu sind die Abtriebswellen 9, 9' mit ihren freien Enden an Riemenscheiben 10 angeschlossen. Die Riemenscheiben 10 stehen über Keilriemen 11 mit Antriebsriemenscheiben 12 in Verbindung, die stirnseitig der Kurbelwelle 7 verdrehfest mit dieser verbunden angeordnet sind.

Damit erfolgt der Antrieb über einen Getriebeweg von dem an das Zug- oder Tragfahrzeug anschließbaren Zapfwellenanschluss 6 über das Verteilergetriebe 8 und zwei zu beiden Stirnseiten hin abragenden Antriebswellen 9, 9', die aus der Vorwärtsfahrtrichtung gesehen hinter der Kurbelwelle 7 angeordnet sind, über seitlich angeordnete Keilriemenräder 10, 12. Hierdurch wird eine sehr nahe Anordnung des Bearbeitungsgerätes an dem Fahrzeug möglich. Der Zapfwellenanschluss 6 kann sogar in den Gerätebereich zurückverlegt angeordnet sein, wie dies Figur 1 andeutet.

Zur Getriebeverbindung von den von dem Verteilergetriebe 8 aus gesehen hier beidseitig, in etwa senkrecht zur Fahrtrichtung (auch schräge Verläufe sind denkbar) abragenden Abtriebswellen 9, 9' zur Kurbelwelle 7 hin werden die Abtriebswellen 9, 9' und die stirnseitigen Enden der Kurbelwelle 7 über ein kraftschlüssiges Getriebe, wie hier den Keilriemenantrieb 26 verbunden. Die so gebildete kraftschlüssige Antriebseinrichtung ist grundsätzlich geeignet, bei von den Werkzeugen 3 ausgehenden Störungen des Bewegungsablaufes als Schlupfkupplung zu wirken. Andererseits kann in dem Antriebsgetriebeweg auch eine andere, gegebenenfalls besser einstellbare Schlupfkupplung eingebaut sein.

Die Antriebseinrichtung 29 weist eine Zugmittelspanneinrichtung 44 zum Spannen des Zugmittels des Zugmittelgetriebes 42 auf. Diese ist hier durch einen Spannscheibe 43 gebildet, die den Keilriemen vorspannt. Die Spannscheibe 43 sitzt drehbar auf einem beweglichen Träger 45. Der Träger 45 ist durch eine Feder 46 in Spannrichtung vorbelastet. Die Spannkraft der Feder 46 ist durch einen Einstellmechanismus, hier in Form einer Spannschraube 47, einstellbar. Durch Einstellung der Spannkraft kann man eine Einstellung Kraftschwelle für die Schlupfkupplung erreichen. Der Träger 45 ist hier in Form eines Schwenkhebels ausgebildet. Durch Bewegen des Trägers 45 lässt sich auch der Keilriemen 11 zwecks Austausch lockern und lösen.

In dem dargestellten Ausführungsbeispiel sind die Riemenscheiben 10 gleich groß wie die Antriebsriemenscheiben 12, so dass das Zugmittelgetriebe in etwa eine Übersetzung von 1 : 1 hat. Durch andere Größenverhältnisse der Scheiben 10 und 12 kann man leicht andere Übertragungsverhältnisse oder Transmissionen erzielen.

Die Kurbelwelle 7 kann einteilig oder mehrteilig ausgebildet sein. Bei zweigeteilter Kurbelwelle 7 werden beide Kurbelwellenteile über die jeweils außenseitig stirnseitig angeordnete Antriebseinrichtung, hier in Form je eines der Keilriemenantriebe 26, angetrieben.

Die hier beschriebene Antriebsvorrichtung 40 kann auf alle Bodenbearbeitungsgeräte der in Rede stehenden Art angewendet werden, insbesondere auf alle der aus der EP 0 452 449 B1, der EP 1 040 741, der DE 200 15 504 U, der DE 200 20 018 U und der EP 1 210 853 A1 bekannten Bodenbearbeitungsgeräte. Es wird eine fahrzeugnahe Anordnung und insbesondere auch eine hohe Betriebsgeschwindigkeit erreicht, wodurch der wirtschaftliche Einsatz derartiger Bearbeitungsgeräte verbessert wird. Es wird durch diese Anordnung möglich, den Antrieb der Bodenbearbeitungswerkzeuge ohne Übersetzung von dem Zapfwellenanschluss bzw. der Kurbelwelle des Zug- bzw. Tragfahrzeugs abzuleiten, wodurch nicht nur eine hohe Arbeitsgeschwindigkeit ermöglicht wird, sondern auch der fertigungstechnische Aufwand gering gehalten wird.

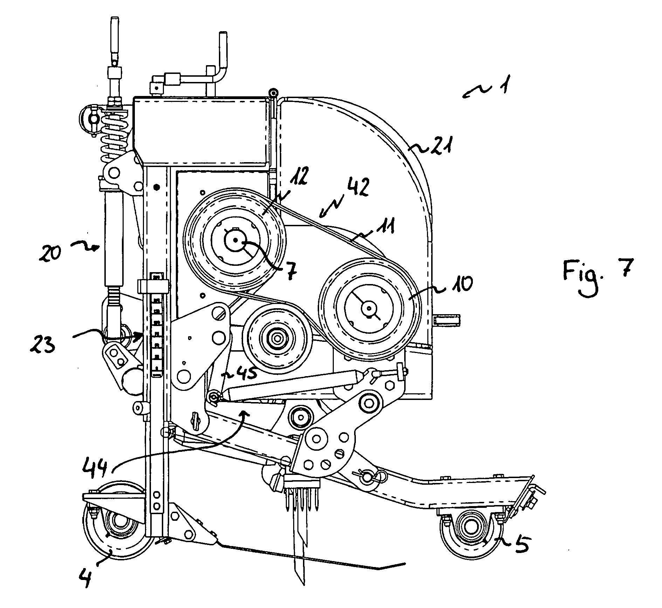

Von daher ist in bevorzugter Ausführung auch möglich, die von der Kurbelwelle 7 ausgehenden und betätigten Pleuelstangen 27 unmittelbar auf die Anlenkungen der Werkzeuge 3 bzw. Werkzeugträger 25 einwirken zu lassen. Demgemäß ist, wie aus den Figuren 7 und 8 ersichtlich ist, jede Pleuelstange 27 mit ihrem werkzeugseitigen Ende über das zweite Lager 36 oder koaxial zu dem zweite Lager 36 an dem Lenkergestänge 24 oder dem Werkzeugträger 25 angelenkt. Bislang wurden diese Pleuelstangen im Lenkergestängebereich zwischen der chassisfesten Lagerung und der Lagerung der Werkzeuge bzw. der Werkzeugträger angelenkt. Natürlich ist eine solche mit der bisherigen Anlenkung verbundene Wegübersetzung auch bei dem vorgeschilderten erfindungsgemäßen Vorgehen nicht ausgeschlossen.

### BEZUGSZEICHENLISTE

- 1: Bodenbearbeitungsgerät
- 2: Gruppe oder Aufeinanderfolge von Werkzeugen
- 3: Werkzeug
- 4: walzenförmige Abstützung
- 5: walzenförmige Abstützung
- 6: Zapfwellenanschluss
- 7: Kurbelwelle
- 8: Verteilergetriebe
- 9, 9': Abtriebswelle
- 10: Riemenscheiben
- 11: Keilriemen
- 12: Antriebsriemenscheiben
- 16: Skala
- 17: Höheneinstelleinrichtung
- 18: Rahmen
- 19: Chassis
- 20: zentrale Verstelleinrichtung
- 21: Abdeckung
- 22: Frontseite
- 23: Anschlusszapfen
- 24: Lenkergestänge
- 25: Halterungen (Werkzeugträger)
- 26: Keilriemenantrieb
- 27: Pleuelstangen
- 28: zentrale Verstellachse
- 29: Antriebseinrichtung
- 30: Anschlag
- 31: große Sporne
- 33: Zinkengruppen
- 35: erstes, chassisfestes Lager
- 36: zweites Lager
- 37: Verstellhebel
- 40: Antriebsvorrichtung für die Kurbelwelle
- 41: Gehäuse
- 42: Zugmittelgetriebe
- 43: Spannscheibe
- 44: Zugmittelspanneinrichtung
- 45: Träger
- 46: Feder
- 47: Spannschraube

## Patentansprüche

1. Fahrbares oder an ein Fahrzeug anschließbares Bodenbearbeitungsgerät (1) mit Werkzeugen (3), die in Richtung auf den zu bearbeitenden Boden geführt sind, und mit einer rotierend antreibbaren Kurbelwelle (7) zum Betätigen der Werkzeuge (3), wobei die Kurbelwelle (7) von wenigstens einem seitlichen Endbereich ihrer Erstreckung quer zur Fahrtrichtung her angetrieben ist, und mit wenigstens einer im seitlichen Endbereich des Bodenbearbeitungsgeräts (1) angeordneten Antriebseinrichtung (29) zum Antreiben der Kurbelwelle (7), **dadurch gekennzeichnet, dass** die Antriebseinrichtung (29) zum Antreiben der Kurbelwelle (7) einen gekapselten kraftschlüssigen Riemenantrieb (26) aufweist, der an einer Antriebsriemenscheibe (12) angreift, die an einem freien Ende der Kurbelwelle (7) verdrehfest mit dieser verbunden ist.

2. Bodenbearbeitungswerkzeug nach Anspruch 1,
**dadurch gekennzeichnet,**
• **dass** die Werkzeuge (3) auf- und abgehend geführt sind,
• **dass** die Kurbelwelle (7) zentral angeordnet ist
und/oder
• **dass** die Kurbelwelle (7) von einem Zug- oder Tragfahrzeug von dessen Antriebsmotor abgeleitet rotierend antreibbar ist.

3. Bodenbearbeitungsgerät nach einem der voranstehenden Ansprüche,
**dadurch gekennzeichnet,**
**dass** es als Bearbeitungsgerät für die Tiefenlockerung von Böden, insbesondere für die Tiefenlockerung eines unterhalb einer Grasnarbe befindlichen Bodenbereiches, ausgebildet ist mit:
• einem höhenverstellbaren, insbesondere geradlinig höhenverstellbaren, Chassis (19) und
• einer an dem Chassis (19) im wesentlichen senkrecht zur Fahrtrichtung verlaufend angeordneten Aufeinanderfolge von Stechwerkzeugen (3).

4. Bodenbearbeitungsgerät nach Anspruch 3,
**dadurch gekennzeichnet,**
**dass** jedes Werkzeug (3) mittels eines Lenkergestänges (24) in - vorzugsweise einstellbarer - Ausrichtung auf den Boden zur Ausführung eines durch die Kurbelwelle (7) angetriebenen Stechvorganges geführt und in einer etwa vertikalen und in Fahrtrichtung verlaufenden Ebene unter Federkraft gegen einen Anschlag (30) verschwenkt gehalten ist,
wobei das Lenkergestänge (24) einerseits an einem chassisfesten Lager (35) und andererseits an dem Stechwerkzeug (3) oder einer dieses aufnehmenden Halterung (25) angelenkt ist.

5. Bodenbearbeitungsgerät nach einem der voranstehenden Ansprüche,
**dadurch gekennzeichnet,**
**dass** die Kurbelwelle (7) von beiden seitlichen Bereichen her angetrieben ist und - vorzugsweise etwa mittig - geteilt ist.

6. Bodenbearbeitungsgerät (1) nach einem der voranstehenden Ansprüche, **gekennzeichnet durch** ein vom Fahrzeug her gesehen jenseits der Kurbelwelle (7) angeordnetes Getriebe (8, 9, 9') zum Übertragen einer zentral in das Gerät (1) eingeleiteten Bewegungskraft auf die Kurbelwelle (7).

7. Bodenbearbeitungsgerät nach einem der voranstehenden Ansprüche,
**dadurch gekennzeichnet,**
**dass** ein Zapfwellenanschluss (6) zum Anschluss an einen Motor eines Zug- oder Tragfahrzeuges das Gerät (1) in Fahrtrichtung durchgreifend angeordnet ist und über ein Verteilergetriebe (8) und wenigstens eine seitlich davon abstrebende Antriebswelle (9, 9') auf wenigstens ein erstes Getrieberad (10) wirkt, das über einen Riemen (11) mit wenigstens dem seitlich auf die Kurbelwelle (7) verdrehfest angebrachten zweiten Getrieberad (12) mit entsprechender Transmission verbunden ist.

8. Bodenbearbeitungsgerät nach einem der voranstehenden Ansprüche,
**dadurch gekennzeichnet,**
**dass** ein geräteseitiger Anschluss (6) zur Verbindung mit einem Zapfwellenabtrieb des Zug- oder Tragfahrzeugs hinter die dem Fahrzeug zugewandte Geräteebene (22) verlagert angeordnet ist.

## Claims

1. Soil cultivating device (1) that is capable of being driven or attached to a vehicle, having tools (3) that are guided towards the soil that is to be cultivated, and having a rotatably drivable crankshaft (7) for actuating the tools (3), wherein the crankshaft (7) is driven transversely of the direction of travel from at least one lateral end region of its extent, and having at least one drive mechanism (29) for driving the crankshaft (7), said mechanism being arranged in the lateral end region of the soil cultivating device (1), **characterised in that** the drive mechanism (29) for driving the crankshaft (7) comprises an encapsulated, frictional engagement belt drive (26) which acts on a drive pulley (12) that is connected to a free end of the crankshaft (7) so as to rotate therewith.

2. Soil cultivating device according to claim 1, **characterised in that**
• the tools (3) are guided to go up and down,
• the crankshaft (7) is arranged centrally and/or
• the crankshaft (7) is adapted to be rotatably driven by the drive motor of a tractor or carrying vehicle.

3. Soil cultivating device according to one of the preceding claims, **characterised in that** it is constructed as a cultivating device for the deep loosening of soil, particularly for the deep loosening of an area of soil located underneath a covering of turf, having
• a chassis (19) that is adjustable in height, particularly linearly adjustable in height, and
• a series of piercing tools (3) arranged on the chassis (19) and extending substantially perpendicular to the direction of travel.

4. Soil cultivating device according to claim 3, **characterised in that** each tool (3) is guided by means of a steering linkage (24) in a - preferably adjustable - alignment onto the soil in order to carry out a piercing operation driven by the crankshaft (7) and is held under spring force in a pivoted position against a stop (30) in a substantially vertical plane extending in the direction of travel, the steering linkage (24) being jointed on the one hand to a bearing (35) fixed to the chassis and on the other hand to the piercing tool (3) or a mounting (25) that receives the latter.

5. Soil cultivating device according to one of the preceding claims, **characterised in that** the crankshaft (7) is driven from both lateral regions and is divided, preferably approximately in the middle.

6. Soil cultivating device according to one of the preceding claims, **characterised by** a set of gears (8, 9, 9') arranged on the far side of the crankshaft (7), viewed from the vehicle, for transmitting a motive force introduced centrally into the device (1) to the crankshaft (7).

7. Soil cultivating device according to one of the preceding claims, **characterised in that** a power take off (6) for connection to a motor of a tractor or carrying vehicle is arranged so as to run through the device (1) in the direction of travel and acts on a least one first gear wheel (10) via a distributor gear (8) and at least one drive shaft (9, 9') extending laterally therefrom, said first gear wheel (10) being connected, with corresponding transmission, via a belt (11), to at least the second gear wheel (12) mounted laterally on the crankshaft (7) so as to rotate therewith.

8. Soil cultivating device according to one of the preceding claims, **characterised in that** a connection (6) on the device side for connecting to a power take-off drive of the tractor or carrying vehicle is arranged offset behind the plane of the device (22) facing the vehicle.

## Revendications

1. Dispositif de préparation du sol (1) mobile ou apte à être attelé à un véhicule, comportant des outils (3), qui sont guidés vers le sol à préparer, et comportant un vilebrequin (7) apte à être entraîné en rotation et destiné à actionner les outils (3), ledit vilebrequin (7) étant actionné transversalement à la direction de déplacement à partir d'au moins une zone d'extrémité latérale de sa dimension longitudinale, et comportant au moins un dispositif de transmission (29), monté dans la zone d'extrémité latérale du dispositif de préparation du sol (1) et destiné à actionner le vilebrequin (7), **caractérisé en ce que** le dispositif de transmission (29) comporte, en vue de l'actionnement du vilebrequin (7), une transmission à courroie (26) assemblée par force et encapsulée, qui entre en prise avec une poulie de transmission (12) qui est assemblée à l'extrémité libre du vilebrequin (7) de manière solidaire en rotation avec celui-ci.

2. Dispositif de préparation du sol selon la revendication 1, **caractérisé**
- **en ce que** les outils (3) sont guidés en va-et-vient vers le haut et le bas,
- **en ce que** le vilebrequin (7) est disposé au centre, et/ou
- **en ce que** le vilebrequin (7) peut être entraîné en rotation à partir d'un véhicule tracteur ou d'un véhicule de support par le moteur d'entraînement de celui-ci.

3. Dispositif de préparation du sol selon l'une quelconque des revendications précédentes, **caractérisé**
**en ce qu'**il est réalisé sous la forme d'un dispositif pour le sous-solage des sols, en particulier pour le sous-solage d'un sol situé en dessous d'une couche d'herbe et comporte :
- un châssis (19) réglable en hauteur, en particulier réglable en hauteur de manière droite, et
- une succession d'outils de fendage (3), disposés au niveau du châssis (19) sensiblement perpendiculairement à la direction de déplacement.

4. Dispositif de préparation du sol selon la revendication 3, **caractérisé**
**en ce que** chaque outil (3) est guidé au moyen d'une timonerie de direction (24) en alignement - de préférence réglable - avec le sol en vue d'effectuer un processus de fendage du sol activé par le vilebrequin (7), et est maintenu en position basculée contre une butée (30) dans un plan sensiblement vertical et orienté dans la direction de déplacement sous l'effet de la force d'un ressort, ladite timonerie de direction (24) étant articulée, d'une part, sur un palier (35) solidaire du châssis et, d'autre part, sur l'outil de fendage (3) ou un support (25) recevant ce dernier.

5. Dispositif de préparation du sol selon l'une quelconque des revendications précédentes, **caractérisé**
**en ce que** le vilebrequin (7) est actionné à partir de ses deux zones latérales et est divisé - de préférence, à peu près au milieu.

6. Dispositif de préparation du sol (1) selon l'une quelconque des revendications précédentes, **caractérisé par** un engrenage (8, 9, 9'), disposé de l'autre côté du vilebrequin (7), par référence au véhicule, et destiné à transmettre sur le vilebrequin (7) une force de mouvement introduite de manière centrale dans le dispositif (1).

7. Dispositif de préparation du sol selon l'une quelconque des revendications précédentes, **caractérisé**
**en ce qu'**un raccord pour arbre de prise de force (6) pour le raccordement à un moteur d'un véhicule tracteur ou d'un véhicule de support est disposé en traversant le dispositif (1) dans la direction de déplacement et, par l'intermédiaire d'une boîte de transfert (8) et d'au moins un arbre d'entraînement (9, 9') partant de part et d'autre de cette dernière, agit sur au moins une première poulie de transmission (10), qui est reliée avec une transmission correspondante par une courroie (11) avec au moins la deuxième poulie de transmission (12) montée solidaire en rotation latéralement sur le vilebrequin (7).

8. Dispositif de préparation du sol selon l'une quelconque des revendications précédentes, **caractérisé**
**en ce qu'**un raccord (6) du côté du dispositif de préparation du sol, pour le raccordement à un arbre récepteur de prise de force du véhicule tracteur ou véhicule de support, est disposé derrière le plan des outils (22) orienté vers le véhicule.
